# DEMANDE DE BREVET EUROPEEN

(11) **EP 1 884 384 A1**
(43) Date de publication de la demande: **06.02.2008**
(21) Numéro de dépôt: 07113453.0
(22) Date de dépôt: 30.07.2007
(51) Int. Cl.: B60J 1/20, B60J 7/00

(54) **Store à enrouleur pour véhicule automobile, à tube galbé, et véhicule comprenant un tel store à enrouleur**

(30) Priorité: 28.07.2006 FR 0606962
(71) Demandeur: WAGON SAS, 79302 Bressuire Cédex (FR)
(72) Inventeur: Chemineau, Nicolas, 85310 Challe sous les Ormeaux (FR); Jean, Anthony, 50810 Saint-Jean des Baisants (FR); Neaux, Jean-Claude, 79300 Terves (FR)
(74) Mandataire: Bioret, Ludovic

(57) **Abrégé**

L'invention concerne un store à enrouleur pour véhicule automobile, mobile entre une position repliée et au moins une position déployée, et comprenant une toile d'occultation solidaire à une de ses extrémités d'un tube à enrouleur galbé et/ou incurvé (10).

Selon l'invention, ledit tube à enrouleur (10) comprend une tige (11) présentant sensiblement le même galbe que ledit tube à enrouleur et étant enveloppée sur au moins une portion substantielle de sa longueur par une gaine (12) sur laquelle s'enroule ladite toile d'occultation, ladite tige comprenant une pluralité de tronçons (13) consécutifs séparés par des moyens d'articulation (14), et, lors d'un déplacement de ladite toile d'occultation, ladite tige (11) est fixe et ladite gaine (12) pivote autour de ladite tige (11).

## Description

Le domaine de l'invention est celui des véhicules automobiles, et notamment des véhicules présentant une surface vitrée importante, par exemple au niveau d'un pavillon vitré. Plus précisément, l'invention concerne notamment l'occultation de telles surfaces vitrées, pour se protéger des rayons du soleil.

De façon générale, l'invention peut être mise en oeuvre aussi bien pour des surfaces vitrées sensiblement horizontales que pour des surfaces vitrées verticales ou inclinées. Elle peut également s'appliquer pour l'équipement de coffres de véhicule.

Une tendance actuelle, en matière de véhicule automobile, est de proposer de plus en plus de surfaces vitrées. On cherche donc à augmenter tant que faire se peut la surface des pare-brises, des vitres latérales, des lunettes arrière, et également la surface vitrée des pavillons.

On a ainsi proposé des surfaces vitrées multiples, par exemple sous la forme de deux ou trois éléments, dont certains peuvent former toit ouvrant.

On développe également des pavillons intégralement, ou essentiellement, vitrés, et ne faisant qu'un, au moins visuellement, avec le pare-brise (absence d'un élément de carrosserie extérieur entre les deux).

Les objectifs de ces développements sont notamment d'offrir :
- une meilleure visibilité pour les occupants du véhicule;
- une luminosité accrue à l'intérieur du véhicule ;
- une sensation d'espace élargi pour les occupants ;
- une amélioration esthétique générale du véhicule ;
- ...

On comprend qu'il est alors nécessaire de prévoir des moyens d'occultation, pour protéger l'habitacle et ses occupants du soleil. Des stores à toile d'occultation amovible, tels que les stores à enrouleur à toile déployable et repliable, selon que l'on souhaite ou non occulter la lumière, sont classiquement mis en oeuvre pour l'occultation des surfaces vitrées.

L'enroulement de la toile sur le tube d'enroulement est souvent assuré par des moyens de rappel logés à l'intérieur du tube d'enroulement. Des moyens de motorisation de la rotation du tube d'enroulement peuvent également être prévus dans certains cas.

Lorsque la surface à occulter est essentiellement plane, l'occultation de celle-ci ne pose pas de problème particulier, la toile étant, généralement, convenablement maintenue en position déployée le long de cette surface. En revanche, dans le cas d'une surface incurvée, cette technique ne permet pas de déployer efficacement une toile en regard de celle-ci, de façon que la toile épouse la forme de la vitre.

Lorsque le galbe de la vitre est essentiellement selon le sens de déploiement de la toile (galbe longitudinal), il sera possible de prévoir des rails de part et d'autre des bords latéraux de la toile de façon à maintenir celle-ci le long de la vitre et que la toile épouse le galbe de celle-ci, par exemple.

En revanche, lorsque le galbe de la surface vitrée est, au contraire, perpendiculaire au sens de déploiement de la toile (galbe transversal), cela n'est pas possible. Ainsi, dans le cas d'un pavillon bombé dans le sens de la largeur du véhicule par exemple, lors du déploiement d'un store classique selon une direction longitudinale par rapport au véhicule, une zone longitudinale centrale de la toile reste relativement éloignée du pavillon.

Or, les pavillons des véhicules, ainsi que les pare-brises, sont de plus en plus souvent non plats. Plus précisément, les pavillons et les pare-brises sont désormais couramment incurvés ou galbés, au moins dans le sens de la largeur (galbe transversal) et également parfois dans le sens de la longueur.

Le rendu esthétique d'un store n'est pas satisfaisant à l'aide d'un store à enrouleur classique et l'occultation n'est pas optimale. En effet, l'écart entre la toile et la vitre reste visible et est susceptible de laisser passer la lumière dans l'habitacle.

Un des problèmes est que le tube enrouleur est généralement linéaire, et qu'en conséquence il s'éloigne de la vitre à occulter en sa partie centrale. On a pensé à réaliser des tubes galbés, mais leur mise en oeuvre est peu aisée.

Ainsi, par exemple, selon une première technique décrite dans le document US10/929,649, le galbe du tube peut être obtenu à partir d'un tube flexible composé d'une succession de barres articulées entre elles par des moyens mécaniques (par exemple des cardans, des rotules avec jeu,...). Lors de son pivotement, un tel tube à enrouleur flexible se déforme pour conserver sa position et son galbe inchangés.

Selon une deuxième technique décrite dans ce même document US 10/929,649, les barres peuvent être également articulées par des moyens élastiques (bandes élastiques, soufflets,...).

Un inconvénient de ces solutions techniques connues est que les moyens d'articulation sont fragiles et/ou s'usent assez rapidement, car ils sont sollicités pour se déformer dans plusieurs directions, ce qui conduit à des dysfonctionnements. En particulier, les moyens d'articulation prévus par ces solutions peuvent se détériorer rapidement sous l'influence des vibrations du véhicule.

Encore un autre inconvénient des solutions techniques connues de tubes galbés est que de tels stores présentent un encombrement important, avant montage, et sont difficiles à stocker.

L'invention a notamment pour objectif de pallier ces inconvénients de l'art antérieur.

Plus précisément, l'invention a pour objectif de proposer un store qui permet de réaliser l'occultation complète, ou à tout le moins optimisée, de surfaces de formes complexes et/ou étendues telles que celles des pavillons mentionnés en référence à l'art antérieur.

En ce sens, l'invention a notamment pour objectif de fournir un tel store d'occultation qui permet de déployer la toile de façon à faire correspondre celle-ci à la forme courbe d'une surface vitrée, et notamment à proximité de son tube à enrouleur.

Un objectif important de l'invention est en outre de fournir un store dont l'encombrement est réduit lorsqu'il est monté dans le véhicule.

Encore un autre objectif de l'invention est de fournir un store d'occultation pour véhicule automobile qui soit efficace et qui présente un aspect visuel de bonne qualité, lorsqu'il est déployé.

Un objectif autre de l'invention est également de proposer un store dont le procédé de fabrication reste simple et relativement peu coûteux à mettre en oeuvre, et dont le montage est aisé.

Ces objectifs, ainsi que d'autres qui apparaîtront par la suite, sont atteints à l'aide d'un store à enrouleur pour véhicule automobile selon la revendication 1.

Ainsi, l'invention repose sur une approche nouvelle et inventive de l'occultation par store à enrouleur permettant de couvrir de façon satisfaisante une surface d'occultation non plane en assurant notamment un bon tendu de la toile, et également de permettre de mettre en oeuvre un tel store sans modifier, et notamment réduire, significativement l'habitacle du véhicule.

En effet, l'invention propose un tube à enrouleur galbé destiné à épouser la forme d'au moins une surface vitrée du véhicule, par exemple une vitre du pavillon, et en particulier comme expliqué ci-avant une surface vitrée présentant un galbe transversal, c'est-à-dire perpendiculaire à la direction de déploiement de la toile, ce qui permet de le loger facilement le long de cet élément sans augmenter dans des proportions importantes l'épaisseur de l'habillage de l'élément de carrosserie contiguë à cette surface vitrée.

D'autre part, un même tube à enrouleur selon l'invention pourra être mis en oeuvre pour l'occultation de vitres de galbes différents, ou pour compenser, lors du montage du tube, les variations de jeu dimensionnel entre différents véhicules d'une même gamme, le galbe de celui-ci pouvant être plus ou moins important en fonction de la contrainte exercée aux extrémités de la tige.

Selon un mode de réalisation avantageux de l'invention, lesdits moyens d'articulation comprennent au moins une bague rotule et ladite gaine est en contact avec ladite bague rotule.

Ainsi, en reposant sur une ou plusieurs bague(s) rotule, la gaine peut pivoter aisément autour de la tige. En outre la mise en oeuvre de bagues rotule permet de compenser un glissement de la gaine entre deux tronçons consécutifs, qui peut entraîner des déformations locales de celle-ci.

Selon un aspect avantageux, ladite gaine est sensiblement souple.

Ainsi, la gaine peut se déformer et donc être mise en forme de façon à adapter le galbe du tube à celui de la vitre à occulter.

Selon une caractéristique avantageuse de l'invention, ladite gaine est solidaire de moyens d'entraînement en rotation à au moins une de ses extrémités.

Ainsi les moyens d'entraînement peuvent communiquer le mouvement de rotation à la gaine, et permettent de contrôler la position de la gaine.

Selon un autre aspect avantageux, lesdits moyens d'entraînement en rotation comprennent des moyens de rappel.

Ainsi, la toile, qui s'enroule/se déroule sur la gaine, peut être maintenue tendue lors de son déploiement/repliement.

Préférentiellement, lesdits moyens de rappel comprennent des éléments appartenant au groupe comprenant :
- ressort spiral ;
- ressort hélicoïdal ;
- lame ressort.

Selon une caractéristique préférentielle de l'invention, lesdits moyens d'entraînement comprennent un élément fixe solidaire d'une extrémité de ladite tige.

Ainsi, les éléments du tube à enrouleur (tige, gaine et moyens d'entraînement) peuvent être assemblés ensemble de façon définitive avant de monter le tube sur le véhicule, ce qui réduit le nombre d'opérations de montage.

Avantageusement, le store à enrouleur est destiné à occulter au moins un des éléments appartenant au groupe comprenant :
- les vitres de pare-brise, à partir de l'intérieur et/ou de l'extérieur de l'habitacle dudit véhicule ;
- les vitres latérales ;
- les vitres de custode ;
- les vitres arrière ;
- les pavillons ;
- les toits ouvrants ; et/ou
- les espaces destinés à recevoir les bagages;
et/ou destiné à cloisonner lesdits espaces destinés à recevoir les bagages.

L'invention telle que présentée concerne également tout véhicule automobile comprenant un tel store à enrouleur.

D'autres caractéristiques et avantages de l'invention apparaîtront plus clairement à la lecture de la description suivante de plusieurs modes de réalisation préférentiels, donnés à titre de simples exemples illustratifs et non limitatifs, et des dessins annexés, parmi lesquels :
- la figure 1 présente une vue en perspective d'un tube à enrouleur galbé d'un store selon un mode de réalisation préféré de l'invention ;
- la figure 2 illustre une vue de détail d'une coupe d'une extrémité du tube à enrouleur de la figure 1.

Le principe général de l'invention repose donc sur une mise en oeuvre simple et efficace d'un store comprenant un tube à enrouleur galbé destiné à occulter une surface non plane. Les inventeurs ont en outre souhaité fournir un tel store occupant un volume réduit lorsqu'il est monté dans l'habitacle d'un véhicule.

L'invention peut être mise en oeuvre pour occulter un pavillon intégralement ou en grande partie vitré, mais également pour occulter une vitre de pare-brise à partir de l'intérieur ou de l'extérieur de l'habitacle, une vitre latérale, une vitre de custode, une vitre arrière de véhicule, un pavillon, etc, ou être utilisé comme cache-bagages ou pour cloisonner un espace destiné à recevoir des bagages.

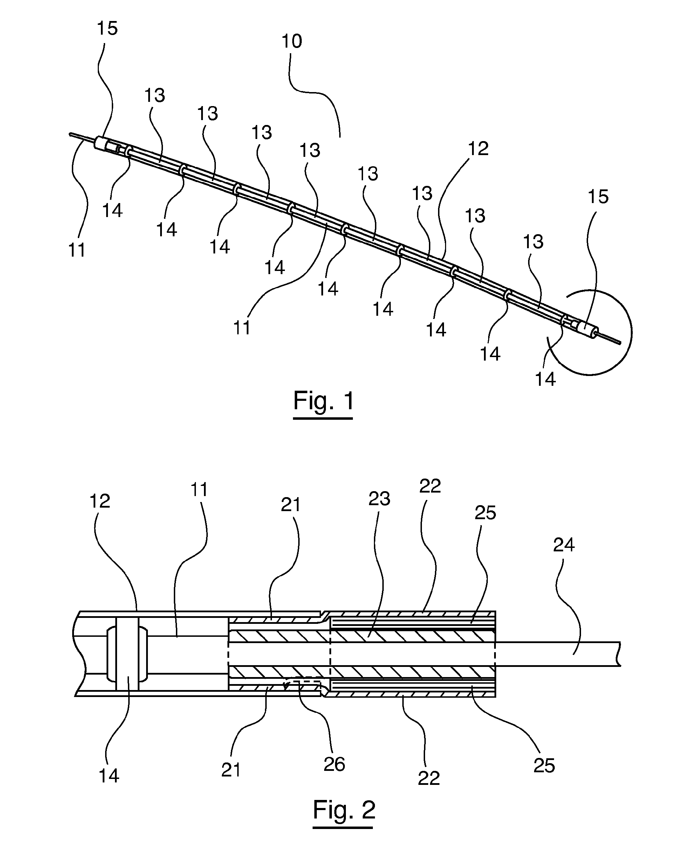

On présente, en référence à la figure 1, un tube à enrouleur d'un store à enrouleur selon l'invention destiné à être monté sur le pavillon d'un véhicule automobile pour occulter la surface vitrée du pavillon.

Le tube à enrouleur 10 comprend une tige galbée fixe 11 qui permet de donner au tube 10 une courbure adaptée à celle de la surface vitrée du pavillon. Une gaine souple 12, sur laquelle s'enroule et se déroule la toile (non représentée), enveloppe la tige 11 sur une longueur substantielle, supérieure à 90 pourcents de la longueur totale de la tige.

Dans ce mode de réalisation, la gaine 12 est réalisée dans une matière plastique souple. Dans une variante de l'invention, il peut être envisagé de prévoir de mettre en oeuvre une gaine dans une matière néoprène, ou dans un tissu renforcé de fibres semi-rigides.

La tige 11 se compose d'un ensemble de huit tronçons 13 de tubes identiques séparés par des moyens d'articulation de type bague rotule 14. Dans différentes variantes de l'invention, on peut prévoir un nombre différent de tronçons, sans sortir du cadre de l'invention, par exemple dans le cas où la largeur de la surface à occulter diffère de celle présentée dans ce mode de réalisation de l'invention, ou pour modifier la courbure de la tige.

On comprend également aisément qu'en contraignant la tige dans sa longueur on peut obtenir tout type de galbe, et que l'invention fournit un solution technique pour permettre d'ajuster de façon simple la courbure du tube à enrouleur pour compenser des jeux dimensionnels rencontrés lors du montage du tube sur plusieurs véhicules d'une même série. Les bagues 14 permettent de mettre en forme la tige (en lui conférant un galbe), en compensant la rigidité des tronçons de tubes 13.

Une fonction complémentaire des bagues 14 est de repositionner la paroi de la gaine entre deux tronçons consécutifs dans une position satisfaisante si la gaine souple tend à glisser par rapport à la tige et donc à se déformer.

Lors du déploiement/repliement de la toile, la gaine est mise en mouvement par des moyens d'entraînement 15 et pivote autour de la tige fixe 11, grâce aux bagues rotules 14, ce qui permet d'enrouler ou réciproquement de dérouler la toile.

La figure 2 illustre une vue de détail d'une coupe d'une extrémité (à droite sur la figure 1, signalée par un cercle) du tube à enrouleur 10 de la figure 1.

La gaine est fixée rigidement sur un épaulement 21 du boîtier extérieur 22 des moyens d'entraînement 15. Une saillie 26 permet de faciliter le montage de la gaine 12 sur l'épaulement 21.

L'extrémité de la tige 11 est solidarisée par serrage avec un élément fixe 23 des moyens d'entraînement 15, ce qui permet d'immobiliser cet élément 23 par rapport aux autres éléments mobiles des moyens d'entraînement 15. De façon préférée, les moyens 15 ont une forme sensiblement de révolution et sont coaxiaux avec l'extrémité de la tige 11.

Des extrémités 24 de la tige 11 s'étendent à l'extérieur de la partie mobile du tube pour permettre de monter le tube 10 sur le pavillon. Lors du montage, ces extrémités 24 sont introduites dans des paliers récepteurs prévus à cet effet dans l'habillage du pavillon.

Des moyens de rappel 25, mis en oeuvre par un ressort spiral dans ce mode de réalisation de l'invention, sont placés à l'intérieur du boîtier 22, pour maintenir la toile tendue lors son déploiement/repliement.

La présente invention n'est bien sûr pas limitée au mode de réalisation qui vient d'être décrit. Au contraire, de nombreuses variantes peuvent être envisagées, et notamment :
- un ressort hélicoïdal et/ou une lame ressort peuvent être prévus pour exercer le couple de rappel tendant à enrouler la toile autour de la gaine du tube à enrouleur ;
- le tube à enrouleur du store selon l'invention peut être motorisé ;
- une pluralité de lames de renfort, ou baleines, galbées peut être solidarisée à la toile du store à enrouleur de façon à faire correspondre la forme de la toile déployée avec la forme non plane de la vitre à occulter. La barre de tirage du store peut également être prévue galbée.

## Revendications

1. Store à enrouleur pour véhicule automobile, mobile entre une position repliée et au moins une position déployée, et comprenant une toile d'occultation solidaire à une de ses extrémités d'un tube à enrouleur galbé et/ou incurvé (10),
**caractérisé en ce que** ledit tube à enrouleur (10) comprend une tige (11) présentant sensiblement le même galbe que ledit tube à enrouleur et étant enveloppée sur au moins une portion substantielle de sa longueur par une gaine (12) sur laquelle s'enroule ladite toile d'occultation,
**en ce que** ladite tige comprend une pluralité de tronçons (13) consécutifs séparés par des moyens d'articulation (14),
et **en ce que**, lors d'un déplacement de ladite toile d'occultation, ladite tige (11) est fixe et ladite gaine (12) pivote autour de ladite tige (11).

2. Store à enrouleur selon la revendication 1, **caractérisé en ce que** lesdits moyens d'articulation (14) comprennent au moins une bague rotule, et **en ce que** ladite gaine (12) est en contact avec ladite bague rotule.

3. Store à enrouleur l'une quelconque des revendications 1 à 2,
**caractérisé en ce que** ladite gaine (12) est sensiblement souple.

4. Store à enrouleur selon l'une quelconque des revendications 1 à 3,
**caractérisé en ce que** ladite gaine (12) est solidaire de moyens d'entraînement en rotation (15) à au moins une de ses extrémités.

5. Store à enrouleur selon la revendication 4, **caractérisé en ce que** lesdits moyens d'entraînement en rotation (15) comprennent des moyens de rappel (25).

6. Store à enrouleur selon la revendication 5, **caractérisé en ce que** lesdits moyens de rappel (25) comprennent des éléments appartenant au groupe comprenant :
- ressort spiral ;
- ressort hélicoïdal ;
- lame ressort.

7. Store à enrouleur selon l'une quelconque des revendications 5 et 6,
**caractérisé en ce que** lesdits moyens d'entraînement (15) comprennent un élément fixe (23) solidaire d'une extrémité de ladite tige.

8. Store à enrouleur selon l'une quelconque des revendications 1 à 7,
**caractérisé en ce qu'**il est destiné à occulter au moins un des éléments appartenant au groupe comprenant :
- les vitres de pare-brise à partir de l'intérieur et/ou de l'extérieur de l'habitacle dudit véhicule ;
- les vitres latérales ;
- les vitres de custode ;
- les vitres arrière ;
- les pavillons ;
- les toits ouvrants ;
- les espaces destinés à recevoir les bagages ;
et/ou destiné à cloisonner lesdits espaces destinés à recevoir les bagages.

9. Véhicule automobile **caractérisé en ce qu'**il comprend au moins un store à enrouleur selon l'une des revendications 1 à 8, ledit store étant mobile entre une position repliée et au moins une position déployée, et comprenant une toile d'occultation solidaire à une de ses extrémités d'un tube à enrouleur galbé et/ou incurvé (10),
**caractérisé en ce que** ledit tube à enrouleur (10) comprend une tige (11) présentant sensiblement le même galbe que ledit tube à enrouleur et étant enveloppée sur au moins une portion substantielle de sa longueur par une gaine (12) sur laquelle s'enroule ladite toile d'occultation,
**en ce que** ladite tige comprend une pluralité de tronçons (13) consécutifs séparés par des moyens d'articulation (14),
et **en ce que**, lors d'un déplacement de ladite toile d'occultation, ladite tige (11) est fixe et ladite gaine (12) pivote autour de ladite tige (11).
